# EUROPEAN PATENT APPLICATION

(11) **EP 1 724 721 A1**
(43) Date of publication of application: **22.11.2006**
(21) Application number: 06009982.7
(22) Date of filing: 15.05.2006
(51) Int. Cl.: G06Q 30/00

(54) **Auction system and auction method using presence information and chat function**

(30) Priority: 16.05.2005 JP 2005142266
(71) Applicant: NEC CORPORATION, Minato-ku, Tokyo 108-8001 (JP)
(72) Inventor: Satsukawa, Seiji, Tokyo 108-8001 (JP)
(74) Representative: Glawe, Delfs, Moll

(57) **Abstract**

An auction system is disclosed which is designed to better reflect the preferences of the user to participate by examining whether or not the potential participants are in a situation in which they are able to participate. When an auction is to be held, an auction administration device retrieves user identification information associated with auction identification information of the auction from an auction information storage unit, and retrieves presence information associated with the user identification information from a presence information storage unit. Then, the auction administration device extracts users in situations in which they can participate in the auction, based on the presence information, and holds the auction if a predetermined condition is satisfied by the users in situations in which they can participate in the auction.

## Description

### BACKGROUND OF THE INVENTION

### 1. Field of the Invention:

The present invention relates to an auction system and an auction method for holding an auction through a network.

### 2. Description of the Related Art:

In recent years, auctions have been held through network-based systems (see, For example, JP-A-2001-331689). In this net auction, a participant who is interested in a particular article places a bid at his/her convenient time during a period set by a seller. Then, a bidder who eventually proposes the highest bid price makes a successful bid. In this system, bids tend to concentrate near a time at which an auction closes, and an article for which a certain participant had proposed the highest bid price immediately before the closure of the auction can be eliminated by another participant who placed a higher bid subsequent to that.

Further, some potential bidders must give up placing bids against their will because auctions for articles really wished by them are set to close at midnight times. To participate in auctions at midnight, participants must attend until the auction closes, so that concerns are rising that the midnight auctions can adversely affect a variety of situations such as work, studies and the like.

In this way, the conventional net auction has had difficulty sufficiently responding to the wishes of participants.

### SUMMARY OF THE INVENTION

It is an object of the present invention to provide an auction system and an auction method which are capable of better reflecting participants' wishes as regards.

To achieve the above object, an auction system of the present invention is an auction system for users to participate in an auction through a network, and has an auction information storage unit, a presence information storage unit, and an auction administration device.

The auction information storage unit stores auction identification information for identifying an auction, and user identification information for identifying a user who has registered for entry into the auction in association with each other. The presence information storage unit stores presence information indicative of a situation as to whether or not a user registered for entry in the auction information storage unit can participate in the auction in association with user identification information of the user.

When an auction is to be held, the auction administration device retrieves user identification information associated with auction identification information of the auction from the auction information storage unit, and retrieves presence information associated with the user identification information from the presence information storage unit. Then, the auction administration device extracts users who are in situations in which they can participate in the auction, based on the presence information, and holds the auction if a predetermined condition is satisfied by the users in situations in which they can participate in the auction.

The above and other objects, features, and advantages of the present invention wiii become apparent from the following description with references to the accompanying drawings which illustrate examples of the present invention.

### BRIEF DESCRIPTION OF THE DRAWINGS

Fig. 1 is a schematic diagram illustrating an exemplary configuration of an auction system according to a first embodiment;
Figs. 2A - 2C are diagrams each showing an exemplary data table in the auction system according to the first embodiment;
Fig. 3 is a schematic diagram for describing an exemplary operation of the auction system according to the first embodiment;
Figs. 4 - 9 are flow charts illustrating an exemplary process of the auction system according to the first embodiment;
Fig. 10 is a schematic diagram illustrating an exemplary configuration of an auction system according to a second embodiment;
Fig. 11 is a diagram showing an exemplary data table in an auction system according to a third embodiment; and
Fig. 12 is a flow chart illustrating an exemplary process of the auction system according to the third embodiment.

### DETAILED DESCRIPTION OF THE PREFERRED EMBODIMENTS

An auction system according to the present invention invites candidate participants to an auction for a certain period, references resulting presence information, and calls users in unison in a time zone in which the users can place bids on a network by chatting to hold a short auction.

The best mode for carrying out the invention will be described below.

### First Embodiment

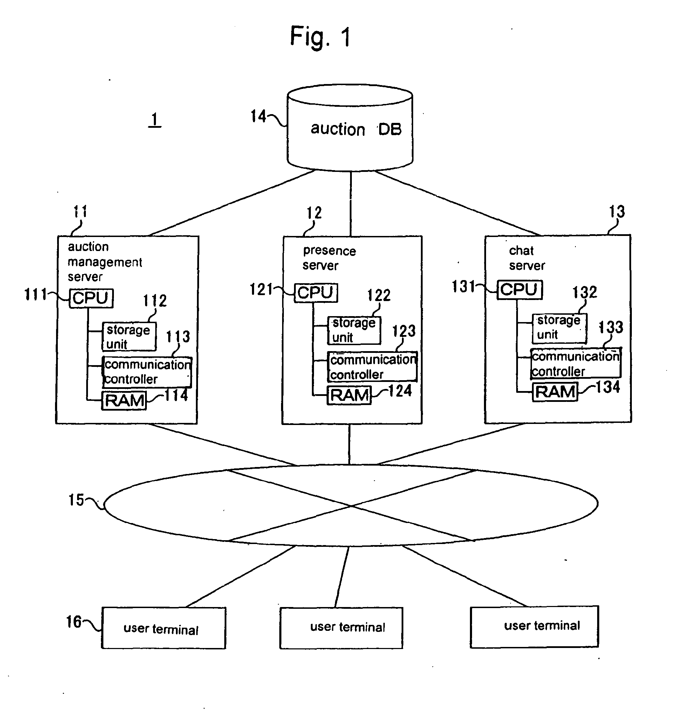

The general configuration of an auction system according to this embodiment will be described with reference to Fig. 1. Fig. 1 is a schematic diagram illustrating an exemplary configuration of the auction system according to this embodiment.

As illustrated in Fig. 1, auction system 1 in a broad sense comprises auction management server 11, presence server 12, chat server 13, auction DB 14, communications network 15, and user terminals 16. Each of servers 11 - 14 can communicate with user terminals 16 through communications network 15.

Auction management server 11 is a server for managing auctions, and holding and administrating auctions, and constructs an auction system in a narrow sense. Presence server 12 is a server for managing users' situations. Chat server 13 is a server for holding and administrating auctions, and in particular administers auctions by using a chat function to chat.

Next, the auction system according to this embodiment will be described in detail with reference to Fig. 1. Fig. 1 illustrates an exemplary internal configuration of each server 11 - 13 in this auction system.

Auction management server 11, which is based on a computer, comprises hardware components such as CPU 111, storage unit 112, communications controller 113, RAM 114 and the like. Auction management server 11 additionally comprises an output device such as a display, input devices such as a keyboard and a mouse, and the like, none of which is shown in the figure.

CPU 111 of auction management server 11 operates based on an OS program and application programs previously stored in storage unit 112, and functions as a controller for executing a variety of processes.

Storage unit 112 comprises an internal storage device such as EEP-ROM, a hard disk or the like, or an external storage device such as a flexible disk, CD-ROM or the like, and stores an OS program, application programs and the like. The application programs in this example include a software program (web engine) for creating web data, and a variety of software programs for executing such processes as registration of bid prices for auctions, user registration and the like.

Communications controller 113 comprises a connection interface to communications network 115, and a communications control circuit. Auction management server 11 can communicate data to/from user terminals 16 through communications controller 113.

RAM 114, which is used as a work area for CPU 111, temporarily stores, for example, part of a program to be executed, data for use in executing a program, and the like.

It should be appreciated that servers 11 - 13 according to this embodiment may be made up of a plurality of computers, instead of a single computer, and the hardware configuration is not limited to the configuration illustrated in Fig. 1. Also, the auction system may comprise other servers and hardware such as a fire-wall server.

Presence server 12 is also based on a computer, like auction management server 11. Presence server 12 comprises CPU 121, storage unit 122, communications controller 123, RAM 124, and hardware components, not shown, such as an output device, an input device and the like. Storage unit 122 of presence server 12 stores a variety of software programs for executing processes such as registration of users' presence information. Since each of functional blocks 121 - 124 is similar to each of functional blocks 111 - 114 of auction management server 11, a detailed description thereon is omitted.

Chat server 13 is based on a computer, like servers 11, 12. Chat server 13 comprises CPU 131, storage unit 132, communications controller 133, RAM 134, and hardware components, not shown, such as an output device, an input device and the like. Storage unit 132 of chat server 13 stores a chat application, and a variety of software programs for executing processes for the administration of auctions, registration of bid prices, and the like. Since each of functional blocks 131 - 134 is similar to each of functional blocks 111 - 114 of auction management server 11, a detailed description thereon is omitted.

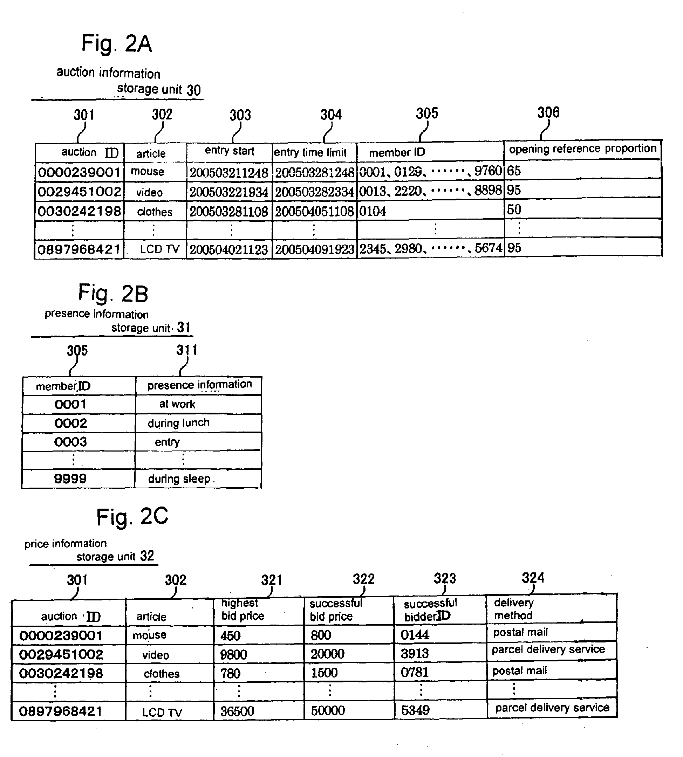

Auction DB 14 comprises a storage device such as a hard disk, an optical disk or the like. Auction DB 14 stores a variety of information for use by auction system 1. Examples of information stored in auction DB 14 are shown in tables of Fig. 2. As shown in Fig. 2, auction DB 14 has auction information storage unit 30, presence information storage unit 31, and price information storage unit 32.

Fig. 2A is a table showing exemplary auction information about auctions. As shown in Fig. 2A, auction information storage unit 30 of auction DB (Database) 14 stores auction ID 301, article 302, entry start date and time 303, entry time limit date and time 304, member ID 305, and opening reference proportion 306 in association with one another. Auction ID 301 is identification information of an auction that has been held. Article 302 is information relating to an article or a service offered to the auction. Entry start date and time 304 is information indicative of the date and time from which users can start entries. Entry time limit date and time 304 is information indicative of the date and time to which bids are accepted. Member ID 305 is user identification information for identifying a user. Opening reference proportion 306 is proportion information which serves as the basis for starting an auction. Specifically, opening reference proportion 306 is a threshold for indicating whether the auction should be opened based on the proportion of auction members who can actually participate in an auction, to auction members who have applied to enter the auction. Fig. 2A shows percentages as an example. In this way, auction information storage unit 30 stores a variety of information in correspondence to auction ID 301. For example, auction information storage unit 30 stores, for each auction ID 301, member ID's 305 of users who have registered for participation in the associated auction.

Fig. 2B is a table showing exemplary presence information on users who participate in an auction. As shown in Fig. 2B, presence information storage unit 31 of auction DB 14 stores member ID 305 and presence information 312 in association with each other. Presence information 312 is status information indicative of users' situations. Presence information storage unit 31 is registered with the user's situation for each member ID 305.

For example, when member ID 305 identifies a user who can participate in an auction as a member identified by "0003," the presence information is registered with "participation." Also, when a member who assigned member ID 305, as a member identified by "0001," is at work, the presence information is registered as "at work." Likewise, the presence information is registered in accordance with users' situations such as "walking," "at table," "rest" and the like. Among these types of presence information, presence information indicative of a user who can participate in an auction, such as "participation," "rest," and "walking" is stored as "participation possible state information." On the other hand, presence information indicative of a user who cannot participate in an auction, such as "at work" and "at table," is stored as "participation impossible state information."

As shown in Fig. 2C, price information storage unit 32 of auction DB 14 stores, for each auction ID 301, highest bid price 321, successful bid price 322, successful bidder ID 322, and delivery method 324 in association with one another. Highest bid price 321 is information indicative of the highest bid price for an article in an auction. Successful bid price 322 is price information indicative of a successful bid price for an article that has been sold in an auction. Successful bidder ID 323 is information for identifying a user who made a successful bid in an auction. Delivery method 324 is information indicative of a method of delivering a sold article. In this way, price information storage unit 32 stores a variety of information at the time of a successful bid in correspondence to auction ID 301.

Communications network 15 is a network such as a mobile telephone network, the Internet, a public network or the like.

User terminal 16 has a function of connecting to the Internet and is a portable telephone, a personal computer (PC), a portable terminal or the like used by a user. User terminal 16 comprises a CPU, a ROM, a RAM, an input device such as input keys, and an output device such as a small-size display, and the like. User terminal 16 has a browser program stored in a memory, and can therefore receive web data transmitted from each server 11 - 13 and can display the web data on the display.

Next, a description will be given of a processing flow of auction system 1 according to this embodiment.

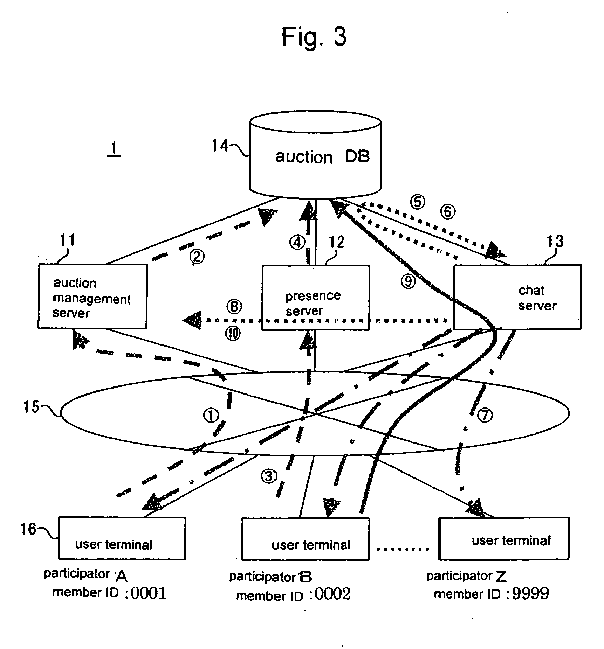

First, the general process of auction system 1 according to this embodiment will be described with reference to Fig. 3. Fig. 3 is a schematic diagram illustrating the general process of auction system 1 according to this embodiment.

As illustrated in Fig. 3, an auction member references a list of auctions through auction management server 11, and applies to enter an auction for which the auction member wishes to place a bid before a time limit. Auction management server 11 records the member ID of the auction member who has declared his/her intention to participate in an auction identified by an auction ID in auction DB 14 and which corresponds to the auction ID.

Further, the auction member has previously registered the presence information indicative of his/her own situation in auction DB 14 through presence server 12 before the participation in the auction. In this event, presence server 12 registers the presence information according to the member ID of each auction member.

When an auction is held, chat server 13 references auction DB 14 to check an auction, to confirm whether the entry time limit has been reached. Chat server 13 references the presence information of auction members who have applied to the auction, the entry time limit of which has been reached.

Chat server 13 notifies all auction members who can participate of the opening of the auction, and starts receiving bids from the auction members. Chat server 13 records the highest bid price in auction DB 14, and closes the auction when the closing time of the auction is reached.

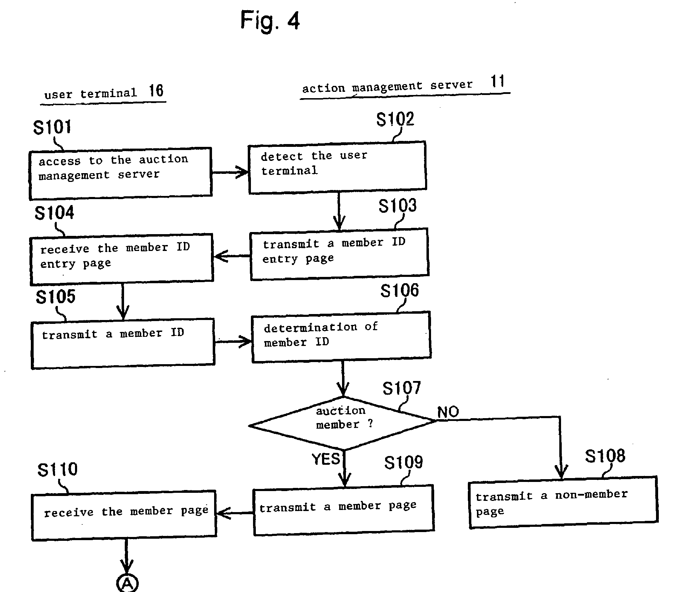

Next, the process of auction system 1 according to this embodiment will be described in greater detail with reference to Figs. 4-8.

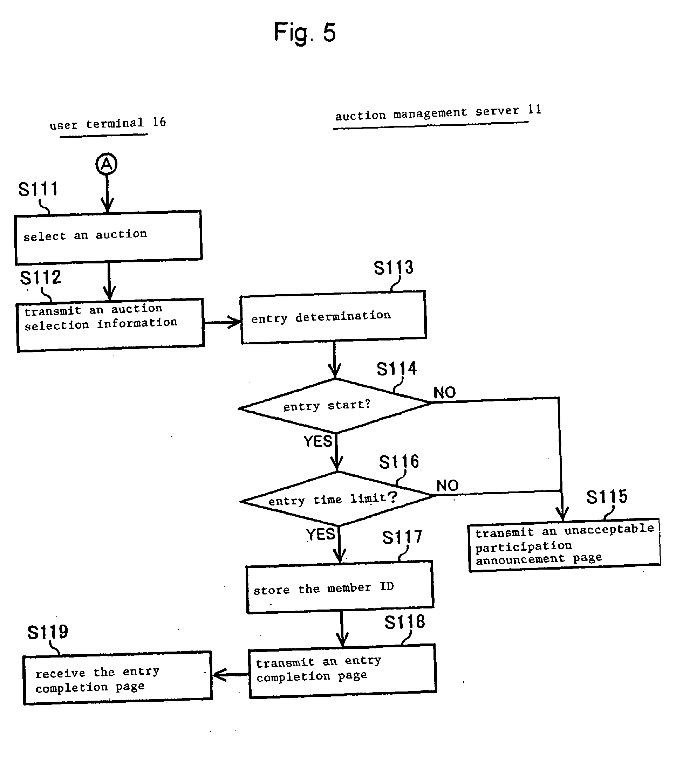

Figs. 4 and 5 are flow charts illustrating the process of auction management server 11 when a user applies to enter an auction. As illustrated in Fig. 4, the user who utilizes auction system 1 accesses auction management server 11 using user terminal 16 (S101). Auction management server 11 detects the access from user terminal 16 (S102). Specifically, the access is detected by the controller of auction management server 11, which comprises CPU 11 and the like. The controller of auction management server 11, upon detection of the access, transmits a web page which contains a member ID entry page to user terminal 16 for determining whether or not user terminal 16 is owned by a registered auction member (S103).

Upon receipt of the member ID entry page, user terminal 16 displays this page on the display (S104). The user of user terminal 16 views the member ID entry page and enters his member ID using input keys of user terminal 16 if the user is an auction member. User terminal 16 transmits the entered member ID to auction management server 11 (S105).

The controller of auction management server 11 references auction information storage unit 30 of auction DB 14 based on the received member ID, and determines whether or not user terminal 16 is owned by a registered auction member (S106). Specifically, the controller of auction management server 11 determines whether or not the acquired member ID is stored in auction information storage unit 30 of auction DB 14.

Assume that the controller of auction management server 11 determines that the acquired member ID is not a member ID of a user stored in auction information storage unit 30 (S107). In this event, auction management server 11 determines that access is from a non-member, and transmits a web page which contains a non-member page, previously created for non-members, to user terminal 106 (S108).

User terminal 16 receives the non-member page and displays the page on the display. Since a non-member cannot participate in an auction utilizing auction system 1, further processing is not performed. User is allowed to participate in an auction utilizing auction system 1 by executing a member registration.

Assume that the controller of auction management server 11 determines that the received member ID is a member ID of a user stored in auction information storage unit 30 of auction DB 14 (S107). In this event, auction management server 11 determines that access is from an auction member, and refers auction information storage unit 30 to retrieve auction information therefrom. Auction management server 11 transmits a web page which contains the retrieved auction information and a member page, previously created for members, to user terminal 16 (S109).

User terminal 16 receives the member page and displays the page on the display (S110). The member page displays, for example, a menu including a list of auctions, entry start date and time/dead line, articles offered in the auctions, settlement methods, additional services, and the like.

As illustrated in Fig. 5, assume that the user views the displayed member page, and selects an auction in which he/she will participate (S111). Auction selection information, which indicates that the auction has been selected, is transmitted from user terminal 16 to auction management server 11 (S112). Upon receipt of the auction selection information, the controller of auction management server 11 determines whether or not the user can apply to enter the auction selected by the user (S113). Specifically, the controller of auction management server 11 compares the date and time at which the auction selection information was received with the entry start date and time.

If the date and time that the auction selection information is received does not exceed the entry start date and time (S114), auction management server 11 determines that the user cannot make an entry into the auction, and transmits a web page which contains an unacceptable participation announcement page to user terminal 16 for displaying that the user cannot participate in the auction (S115). The user terminal 16 receives the unacceptable participation announcement page, and displays the page on the display.

If the date and time that the auction selection information is received exceeds the entry start date and time (S114), auction management server 11 compares the received date and time with the entry time limit. If the date and time that the auction selection information is received exceeds the entry time limit (S116), auction management server 11 determines that the user cannot apply to enter the auction, and transmits a web page which contains the unacceptable participation announcement page to user terminal 16 (S115). User terminal 16 receives the unacceptable participation announcement page, and displays the page on the display.

If the auction selection information received date and time exceeds the entry start time but does not exceed the entry time limit (S116), auction management server 11 determines that the user can apply to enter the auction. In this event, the controller of auction management server 11 stores the member ID contained in the received auction selection information in auction information storage unit 30 of auction DB 14 to update the contents of auction information storage unit 30 (S117). The controller of auction management server 11 also transmits a web page which contains an entry completion page to user terminal 16 (S118). User terminal 16 receives the entry completion page, and displays the page on the display (S119).

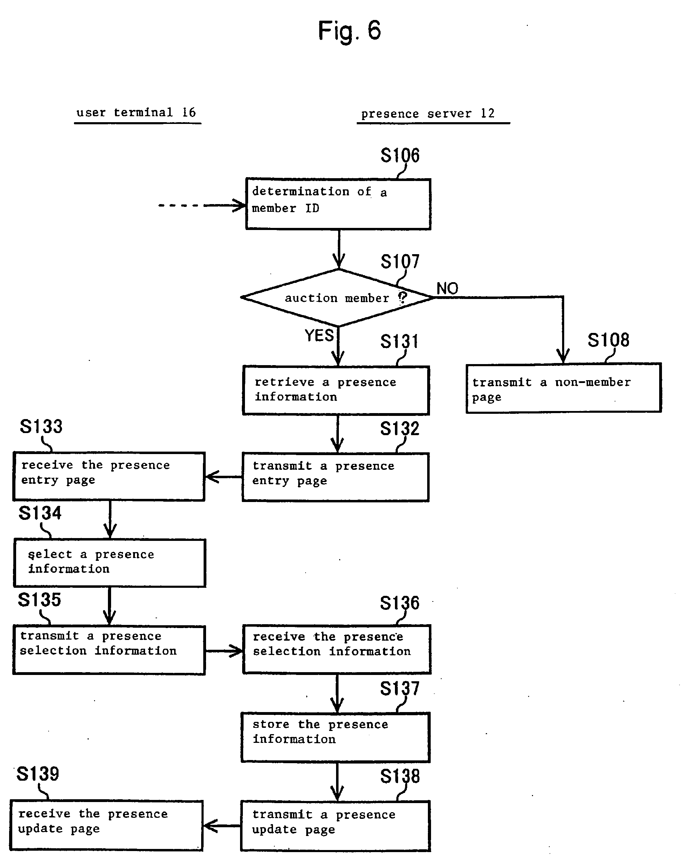

Fig. 6 is a flow chart illustrating the process executed by presence server 12 for managing users' situations when an auction is held. As illustrated in Fig. 6, when a user utilizes auction system 1, the user accesses presence server 12 using user terminal 16. Upon detection of the access from user terminal 16, the controller of presence server 12 determines whether or not the user of user terminal 16 is registered auction member. Since this determination made by presence server 12 is similar to the determination made by auction management server 11 shown in S101 - S108, a description thereon is omitted.

Assume that the controller of presence server 12 determines that a member ID acquired from user terminal 16 has been stored in auction information storage unit 30 of auction DB 14 (S107). In this event, presence server 12 determines that access comes from an auction member, and refers presence information storage unit 31 of auction DB 14 to retrieve presence information (S131). Presence server 12 transmits a web page which contains a presence entry page to user terminal 16 based on the retrieved presence information (S132). User terminal 16 receives the presence entry page, and displays the page on the display (S133). The presence entry page displays, for example, a menu including presence information entered at the last time, future presence selection information which can be selected, and the like.

Assume that the user views the menu on the displayed presence entry top page, and selects a "presence" which matches the situation at that time (S134). Presence selection information, which indicates that the presence has been selected, is transmitted from user terminal 16 to presence server 12 (S135). Presence server 12 receives the presence selection information (S136). The controller of presence server 12 stores the presence information that corresponds to the member ID and that is contained in the received auction selection information in presence information storage unit 31 of auction DB 14 to update the contents of presence information storage unit 31(S137). The controller of presence server 12 further transmits a web page which contains a presence update page to user terminal 16 (S138). User terminal 16 receives the presence update page, and displays the page on the display (S139).

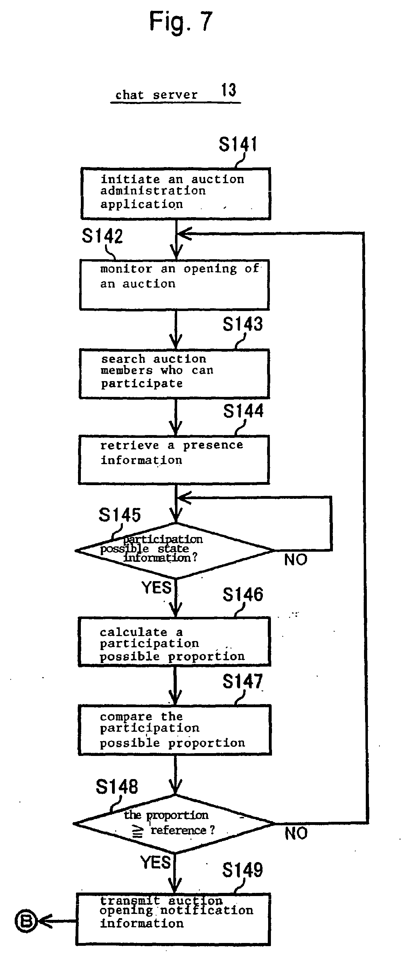

Figs. 7 - 9 are flow charts illustrating processes for holding and administrating an auction. As illustrated in Fig. 7, chat server 13 initiates the chat application and auction administration application (S141) to monitor when an auction should be opened (S142). Specifically, the controller of chat server 13 searches auction members who have applied to enter the auction for those members who can participate in the auction (S143), and refers presence information storage unit 31 of auction DB 14 to retrieve presence information of members who can participate in the auction (S144).

Specifically, the controller of chat server 13 determines that the auction member having the member ID can participate in the auction if the associated presence information is participation possible state information (S145). Determining that the auction member can participate in the auction, the controller of chat server 13 counts the number of members who can participate in the auction to calculate the number of members who can participate. The controller of chat server 13 calculates the proportion of auction members who can participate in the auction (participation possible member proportion) from the calculated number of members who can participate (S146). On the other hand, the controller of chat server 13 determines that the auction member having the member ID cannot participate in the auction if the associated presence information is not participation possible state information (S145). In this event, the controller of chat server 13 repeats the search until it finds a member who can participate in the auction.

The controller of chat server 13 retrieves the opening reference proportion stored in auction information storage unit 30 of auction DB 114, and compares the opening reference proportion with the calculated participation possible member proportion (S147). If the participation possible member proportion is larger than the opening reference proportion (S148), the controller of chat server 13 transmits auction opening notification information, indicating an auction opening notification in chat form(S149), to user terminals 16 for those auction members who can participate. Also, the controller of chat server 13 transmits a web page which contains an auction top page to user terminals 16 together with the auction opening notification information. On the other hand, if the participation possible member proportion is smaller than the opening reference proportion (S148), the controller of chat server 13 returns to the monitoring the opening of the auctions.

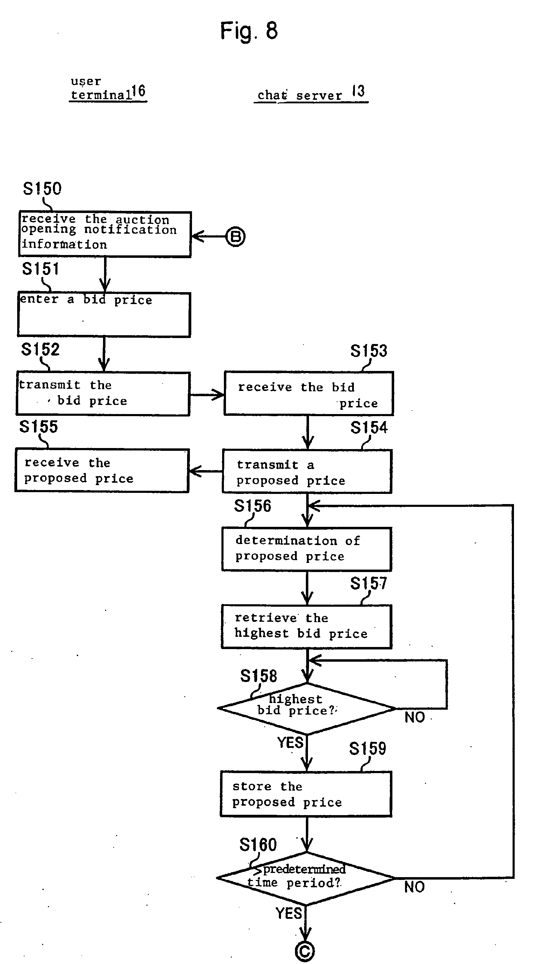

As illustrated in Fig. 8, user terminal 16 receives the auction opening notification information in chart form, and displays an auction message indicative of the contents of this information on the display (S150). This auction message displays the contents, for example, a list of auctions, articles offered in the auctions, bid prices, settlement methods, delivery methods, additional services, and the like.

Assume that the user enters a bid price while viewing the displayed auction page (S151). This bid price may be entered through a voice input from user terminal 16 or entered by typing keys on user terminal 16. Bid price information indicative of the entered bid price is transmitted from user terminal 16 to chat server 13 (S152). Upon receipt of the bid price information (S153), the controller of chat server 13 sets the bid price included in the received bid price information to a proposed price, and transmits proposed price information indicates of this proposed price to user terminal 16 in chart form (S154). User terminal 16 receives the proposed price information in a chat form, and displays an auction message that indicates the contents of this information on the display (S155).

The controller of chat server 13 determines whether or not the highest bid price matches the proposed price at the time it has been received (S156). Specifically, the controller of chat server 13 refers price information storage unit 32 of auction DB 14 to retrieve highest bid price information (S157), and compares the retrieved highest bid price with the proposed price. If the retrieved highest bid price is higher than the proposed price (S158), the controller of chat server 13 does not update price information storage unit 32. Conversely, if the highest bid price is lower than the proposed price (S158), the controller stores the proposed price in price information storage unit 32 as the highest bid price (S159). By making the comparison in the order of received date and time, the highest bid price at that time is kept registered in price information storage unit 32.

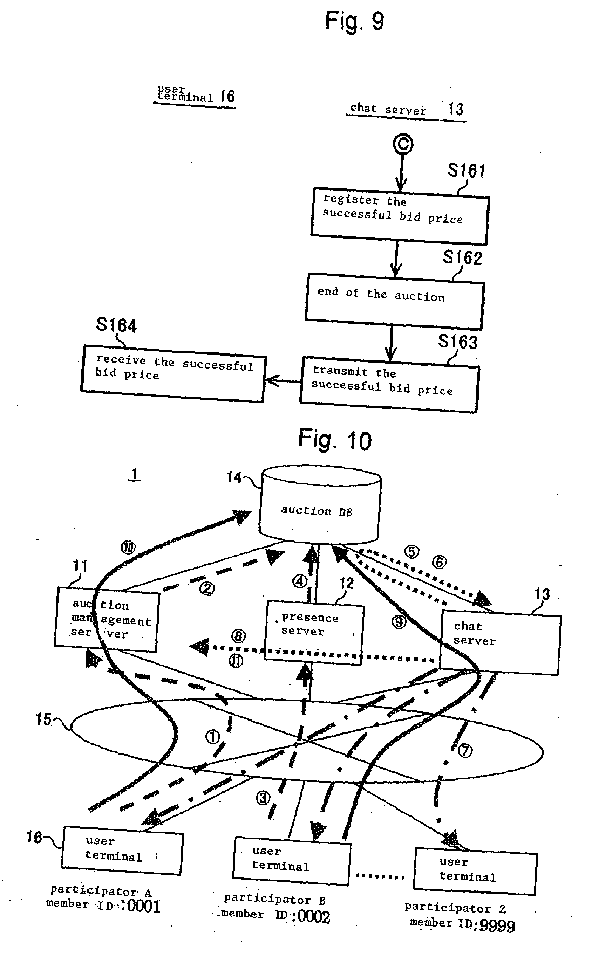

The controller of chat server 13 continues the aforementioned comparison and registration until it does not receive bid price information from user terminals 16 for a predetermined time period. Specifically, if the predetermined time period is exceeded by a time period for which no bid price information has been received from user terminals 16 (S160), the controller of chat server 13 sets the bid price of bid price information, that is received at the time closest to the exceeded time during which no bid was received, as the winning bid price. As illustrated in Fig. 9, this successful bid price is registered in price information storage unit 32 of auction DB 14 from chat server 13 (S161). The controller of chat server 13 continues the auction if the predetermined time period is not exceeded by the time period during which no bid price information has been received.

The controller of chat server 13 determines the end of the auction at the time that the successful bid price is set (S162), and notifies user terminals 16 of the end of the auction, together with successful bid price information that indicates the successful bid price, in a chat form (S163). User terminal 16 receives the auction page, and displays the page on the display (S164).

As described above, since the auction system of this embodiment refers the presence information when the system is going to hold an auction, the system can keep track of users' situations in a time zone in which the auction is held based on the presence information. This permits chat server 13 to send an auction opening notification to users who can participate. In particular, chat server 13 can set an auction opening time in a time zone which is convenient for many users based on the presence information of users who will participate in the auction. Accordingly, it is possible to provide a system in which an auction, that sufficiently takes into account the user's preference (ie time, date), will be held. Further, this facilitates user participation in an auction, a larger number of bids are actively placed by the users, thus permitting the users to experience the real taste of an auction in an environment closer to an auction at which users are physically present.

### Second Embodiment

In the first embodiment, chat server 13 automatically administers auctions in a chat form, however, auctions may be administrated not only by chat server 13 but also by auction management server 11.

Fig. 10 is a schematic diagram illustrating auction system 1 in this embodiment. The auction opening notification shown in Fig. 7 is sent not only to user terminal 16 but also to auction management server 11. This permits the user to access auction management server 11 from a browser running on user terminal 16 to participate in an auction which is being held, in addition to participating in the auction in a chat form through chat server 13. When the user participates in an auction from the browser on user terminal 16 in this way, the process involved for participating in the auction is performed by auction management server 11. Since this process is similar to the aforementioned one performed by the chat server 13, a description thereon is omitted here.

By thus controlling the opening and closure of an auction not only by chat server 13 but also by auction management server 11, it is possible to avoid a high load on the server for monitoring a plurality of auctions and a : plurality of auction members. For this reason, chat server 13 is preferably provided separately from auction management server 11. Also, a number of chat servers 13 proportional to the number of auction ID's may be installed to balance loads on the servers.

### Third Embodiment

In the first and second embodiments, auction participants and those who offer merchandise for auction are not associated with each other, but the two parties may be associated with each other. A third embodiment will de described, as an example of such association, for the case where the participation in an auction is allowed to only those restricted auction members who have in the past dealt with those who have offered merchandise for auction.

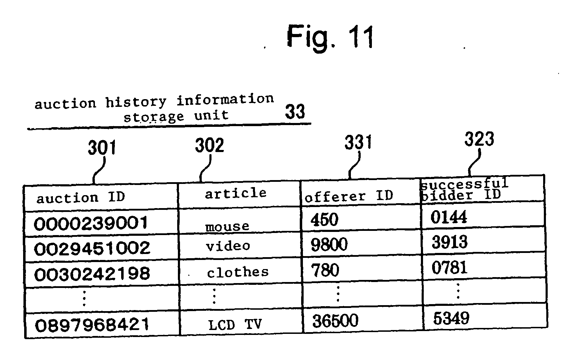

In auction system 1 in this embodiment, auction DB 14 stores auction history information indicating auction history in addition to the aforementioned auction information, presence information, and price information. Fig. 11 is a table showing an example of this auction history information.

As shown in Fig. 11, auction history information storage unit 33 of auction DB 114 stores auction ID 301, article 302, offerer ID 331, and successful bidder ID 323 in association with one another. Offerer ID 331 is user identification information for identifying a user who has offered an article in an auction. Successful bidder ID 323 is user identification information for identifying a user who has made a successful bid for the article. In this way, auction history information storage unit 33 stores offerer ID 331 and successful bidder ID 323 in association with each other.

In auction system 1 in this embodiment, chat server 13 determines whether or not an auction will be held, after implementing the process (S144) to search for an auction member, shown in Fig. 7, and determines whether or not the auction member is qualified for the participation before implementing the process to send an auction opening notification (S146 - S149).

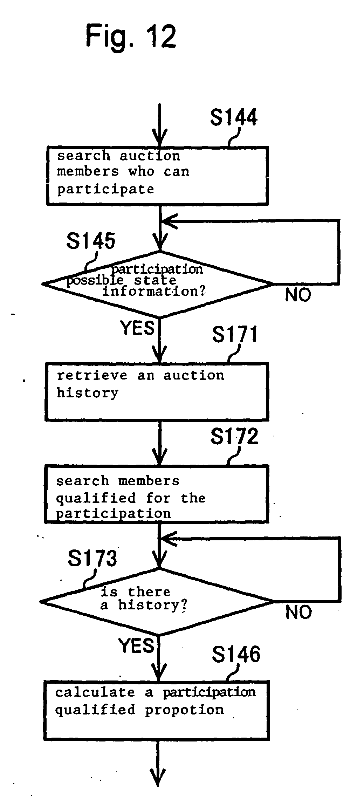

Fig. 12 is a flow chart illustrating an exemplary process for determining whether or not an auction member is qualified for the participation.

If the presence information is participation possible state information (S145), the controller of chat server 13 determines that the auction member having a member ID associated with the presence information can participate in the auction. In this event, the controller of chat server 13 refers auction history information storage unit 33 of auction DB 14 to retrieve auction history information (S171), and determines based on this auction history information whether or not the auction member has dealt with the offerer of the article in the past (S172).

Specifically, the controller of chat server 13 compares the member ID of the auction member with a successful bidder ID associated with an auction ID for an auction in the auction history information. The controller of chat server 13 determines that the auction member is qualified for the participation in the auction if the member ID matches the successful bidder ID (S173).

If the member ID does not match the successful bidder ID in the auction history information, the controller of chat server 13 compares the next member ID with the successful bidder ID, and repeats this processing. The controller of chart server 13 calculates the proportion of auction members who can participate in the auction and are qualified for the participation (participation possible member proportion) (S146). The controller of chat server 13 retrieves the opening reference proportion stored in auction information storage unit 30 of auction DB 14, and compares the retrieved opening reference proportion with the calculated participation possible member proportion (S147). If the participation possible member proportion is larger than the opening reference proportion (S148), the controller of chat server 13 transmits auction opening notification information indicative of an auction opening notification in a chat form to user terminals 16 of auction members who are qualified for the participation and can participate (S149).

In this way, according to auction system 1 of this embodiment, the opening notification can be sent to particular auction members who have dealt with an offerer in the past, so that only credible users can be allowed to participate in the auction.

While preferred embodiments of the present invention have been described using specific terms, such description is for illustrative purposes only, and it is to be understood that changes and variations may be made without departing from the spirit or scope of the following claims.

## Claims

1. An auction system for a user to participate in an auction through a network, comprising:
an auction information storage unit for storing auction identification information for identifying an auction, and user identification information for identifying a user who has registered for entry into the auction in association with each other;
a presence information storage unit for storing presence information in association with the user identification information of the user, indicating a situation as to whether or not the user who has registered for entry in said auction information storage unit can participate in the auction; and
an auction administration device operable when the auction is to be held for retrieving user identification information associated with auction identification information of the auction from said auction information storage unit, retrieving presence information associated with the user identification information from said presence information storage unit, selecting users in situations where the users can participate in the auction based on the presence information, and holding the auction if a predetermined condition is satisfied by the users in situations where the users can participate in the auction.

2. The auction system according to claim 1, wherein said auction administration device notifies the users in situations where the users can participate in the auction of the opening of the auction that will be conducted in a chat format when the auction will be held.

3. The auction system according to claim 1 or 2, wherein said auction administration device administers the auction held in the chat form.

4. The auction system according to claim 1, wherein said auction administration device extracts user identification information associated with the presence information when said auction administration device determines, based on the presence information, that the users can participate in the auction.

5. The auction system according to claim 1, wherein said auction information includes entry time limit information indicative of a time limit by which users can apply to enter the auction,
wherein said auction administration device determines a time at which the auction is held on the basis of the entry time limit information.

6. The auction system according to claim 1, further comprising an auction history information storage unit for storing auction history information indicative of a history of auctions utilized by the users,
wherein said auction administration device retrieves the auction history information from said auction history information storage unit when the auction is held, determines based on the auction history information whether or not the users are qualified for participation in the auction, and selects users who are qualified for participation in the auction and can participate in the auction.

7. The auction system according to claim 6, wherein said auction history information includes offerer identification information for identifying an offerer in an auction, and successful bidder identification information for identifying a successful bidder in the auction in association with each other,
wherein said auction administration device determines that a user is qualified for the participation in the auction if the user has user identification information corresponding to successful bidder identification information associated with offerer identification information of an offerer of an auction to be held.

8. The auction system according to claim 1, further comprising an auction management device for recording user identification information of a user who registers for entry into the auction in said auction information storage unit in association with auction identification information of the auction, and for recording presence information of a user registered in said auction information storage unit in association with user identification information of the user.

9. An auction method for holding an auction in which users participate through a network, said method comprising:
previously stored auction identification information for identifying an auction, and user identification information for identifying a user who has registered for entry into the auction in association with each other;
previously recorded presence information indicative of a situation as to whether or not the user who has registered for entry can participate in the auction in association with the user identification information of the user;
retrieving user identification information associated with auction identification information of the auction when the auction is to be held;
retrieving presence information associated with the user identification information;
selecting users in situations in which the users can participate in the auction based on the presence information; and
holding the auction if a predetermined condition is satisfied by users in situations where the users can participate in the auction.

10. The auction method according to claim 9, further comprising notifying the users in situations in which the users can participate in the auction of the opening of the auction in a chat form when the auction is held.

11. The auction method according to claim 9, wherein the selecting step includes extracting the user identification information associated with the presence information if the users can participate in the auction.

12. The auction method according to claim 9, wherein said auction information includes entry time limit information indicative of a time limit by which users can apply to enter the auction,
wherein said method further comprises determining a time at which the auction is held on the basis of the entry time limit information.

13. The auction method according to claim 9, further comprising:
previously stored auction history information indicative of a history of auctions utilized by the users;
determining based on the auction history information whether or not the users are qualified for the participation in the auction when the auction is held; and
selecting users who are qualified for participation in the auction and can participate in the auction.

14. The auction method according to claim 13, wherein said auction history information includes offerer identification information for identifying an offerer in an auction, and successful bidder identification information for identifying a successful bidder in the auction in association with each other,
wherein said method further comprises determining that a user is qualified for participation in the auction if the user has user identification information corresponding to successful bidder identification information associated with the offerer identification information of an offerer of an auction to be held.
